(19) Europäisches Patentamt
European Patent Office
Office européen des brevets

(11) EP 1 806 547 A1

(12) DEMANDE DE BREVET EUROPEEN

(43) Date de publication:
11.07.2007 Bulletin 2007/28

(51) Int Cl.:
*F25B 9/00* (2006.01)

(21) Numéro de dépôt: 07100001.2

(22) Date de dépôt: 02.01.2007

(84) Etats contractants désignés:
AT BE BG CH CY CZ DE DK EE ES FI FR GB GR
HU IE IS IT LI LT LU LV MC NL PL PT RO SE SI
SK TR
Etats d'extension désignés:
AL BA HR MK YU

(30) Priorité: 04.01.2006 FR 0600059

(71) Demandeur: Valeo Systèmes Thermiques
78321 Le Mesnil St Denis Cedex (FR)

(72) Inventeurs:
• Yahia, Mohamed
75005, Paris (FR)
• Liu, Jin Ming
78700, Conflans Ste Honorine (FR)

(74) Mandataire: Léveillé, Christophe
Valeo Systemes Thermiques
8, rue Louis Lormand
La Verrière BP 513
78321 Le Mesnil-Saint- Denis Cedex (FR)

(54) **Module de détente pour installation de climatisation à deux évaporateurs**

(57) The invention proposes an expansion module for an air-conditioning loop (10) operating with a supercritical refrigerant. The module is connected to the loop through an input and two outputs. The module comprises an expansion device (120), and a distribution valve (16) connected to the expansion device and to the two outputs. A loop provided with two evaporators using such expansion module is also proposed. The two evaporators (131, 132) are connected in parallel. The module receives the refrigerant from a gas cooler through its input and supplies the refrigerant to at least one of the two evaporators (131, 132) through its outputs.

Fig.4

EP 1 806 547 A1

**Description**

L'invention concerne les modules de détente utilisés dans les installations de climatisation à deux évaporateurs, notamment pour véhicules automobiles.

De telles installations sont généralement prévues dans les véhicules de taille importante où l'utilisation d'un seul évaporateur ne suffit pas pour refroidir l'air qui circule dans l'habitacle.

Généralement, l'un des évaporateurs est placé à l'avant du véhicule, tandis que l'autre évaporateur est placé à l'arrière. Les deux évaporateurs sont alors couplés pour fournir un flux d'air climatisé dans l'habitacle du véhicule.

Généralement, de telles installations utilisent un fluide réfrigérant à basse pression (fonctionnement en mode sous-critique), notamment le fluide R134A. Cependant, ces installations ne sont cependant pas adaptées pour les fluides réfrigérants à haute pression (fonctionnement en mode supercritique) tel que le dioxyde de carbone (R744).

Le brevet US 6 092 379 propose un circuit de climatisation parcouru par un fluide réfrigérant supercritique. Ce circuit est équipé de deux évaporateurs montés en parallèle. Une vanne de réduction de pression est montée dans chaque branche en amont de l'un des évaporateurs. Les deux vannes reçoivent le fluide réfrigérant qui sort du refroidisseur de gaz. Elles sont adaptées pour amener le fluide réfrigérant qui sort du refroidisseur de gaz à une pression déterminée à partir de la température du fluide en sortie du refroidisseur de gaz, avant qu'il soit envoyé dans les évaporateurs.

Ce document propose donc une installation de climatisation à deux évaporateurs adaptée à l'utilisation d'un fluide supercritique. Cependant, l'installation proposée fait intervenir un nombre important de tubes et de connexions, ce qui augmente le risque de fuite, conséquence d'un fonctionnement en mode supercritique avec un gaz comme le dioxyde de carbone puisque les pressions sont très élevées, par exemple de l'ordre de 140 bars. Par ailleurs, la structure générale des deux branches équipées des évaporateurs est complexe.

L'invention vient améliorer la situation en proposant un module de détente pour circuit de climatisation à fluide réfrigérant supercritique. Le module est relié au circuit par une entrée et deux sorties. Il comporte un dispositif de détente et une vanne de répartition reliée au dispositif de détente et aux deux sorties.

Le dispositif de détente et la vanne de répartition sont assemblés entre eux de manière à former un module unitaire.

Le dispositif de détente et la vanne de répartition sont rapportés sur un bloc commun de manière à former un ensemble unitaire, le bloc commun présentant l'entrée et les sorties.

Le module de détente comporte un clapet de surpression.

Le clapet de surpression est placé entre le dispositif de détente et la vanne de répartition.

La vanne de répartition est une vanne à trois voies.

L'invention propose en outre un circuit de climatisation, pour véhicule à moteur, parcouru par un fluide réfrigérant supercritique, comprenant un compresseur , un refroidisseur de gaz et deux évaporateurs, montés en parallèle. Le circuit comporte un module de détente tel que défini ci-dessus, recevant le fluide en provenance du refroidisseur de gaz par ladite entrée et délivrant le fluide à l'un au moins des deux évaporateurs par lesdites sorties.

Le circuit comporte en outre un échangeur interne agencé de manière à permettre un échange de chaleur entre une portion de la branche reliant les évaporateurs au compresseur et une portion de la branche reliant le refroidisseur de gaz au module de détente.

L'invention propose également une installation de climatisation équipée d'un circuit de climatisation telle que définie ci-dessus. L'installation comporte en outre une unité de contrôle adaptée pour contrôler la vanne de répartition du module de détente.

Des caractéristiques optionnelles de l'installation de climatisation de l'invention, complémentaires ou de substitution, sont énoncées ci-après:

- En présence d'une commande d'activation des deux évaporateurs, l'unité de contrôle est apte à contrôler la vanne de répartition selon une loi de régulation choisie fournissant le signal de commande de la vanne en fonction de la température d'évaporation de l'un au moins des évaporateurs.

- L'unité de contrôle est apte à utiliser la température d'évaporation de l'évaporateur dont la consigne est la plus grande comme paramètre de régulation pour contrôler la vanne de répartition.

- L'unité de contrôle est apte à utiliser la différence entre les températures d'évaporation des deux évaporateurs comme paramètre de régulation pour contrôler la vanne de répartition.

- Le circuit de climatisation comporte deux capteurs de température aptes à mesurer respectivement la température d'évaporation du premier évaporateur et la température d'évaporation du deuxième évaporateur.

- L'unité de contrôle est apte à utiliser la différence entre la température d'évaporation du premier évaporateur et une estimation de la température d'évaporation du deuxième évaporateur comme paramètre de régulation pour contrôler la vanne de répartition.

- L'unité de contrôle est apte à calculer l'estimation de la température d'évaporation du deuxième évaporateur à partir du coefficient thermique de l'évaporateur, de la pression du fluide à la sortie du deuxième évaporateur, et de la température du flux d'air en aval du deuxième évaporateur.

- L'installation comporte un capteur de température placé au niveau du premier évaporateur pour mesurer la température d'évaporation du premier évaporateur.

- Chaque capteur de température est placé dans la zone de surchauffe de l'évaporateur associé ou dans le flux d'air traversant l'évaporateur associé.

- La loi de régulation est une régulation en boucle fermée fournissant le signal de commande de la vanne en fonction de l'écart entre la mesure et la consigne du paramètre de régulation, en particulier une régulation proportionnelle intégrale dérivée.

- En présence d'une commande d'utilisation d'un seul évaporateur, l'unité de contrôle est apte à commander l'ouverture de la vanne de répartition de manière à envoyer sensiblement tout le fluide réfrigérant vers l'évaporateur à utiliser.

- L'unité de contrôle est en outre apte à contrôler le compresseur selon une loi de régulation choisie fournissant le signal de commande du compresseur en fonction d'un paramètre de régulation relatif à la température d'évaporation de l'un au moins des évaporateurs.

- L'unité de contrôle est apte à utiliser la température d'évaporation de l'évaporateur dont la consigne de température d'évaporation est la plus petite comme paramètre de régulation pour contrôler le compresseur.

- Le compresseur est à contrôle externe et à cylindrée variable.

- Le premier évaporateur est placé dans le compartiment de climatisation avant du véhicule, le deuxième évaporateur étant placé dans le compartiment de climatisation arrière du véhicule.

L'invention propose également un procédé de contrôle du circuit de climatisation défini ci-dessus, comportant les étapes suivantes:

a) déterminer si les deux évaporateurs doivent être utilisées en fonction des demandes en froid des passagers et
b) si les deux évaporateurs doivent être utilisés, réguler la vanne de répartition selon une loi de régulation choisie utilisant comme paramètre de régulation la température d'évaporation de l'un au moins des évaporateurs.

D'autres caractéristiques et avantages de l'invention apparaîtront à l'examen de la description détaillée ci-après, et des dessins annexés sur lesquels:

- la figure 1 est un schéma d'un circuit de climatisation de l'invention;
- la figure 2 est un schéma du module de détente, selon l'invention;
- la figure 3 est un schéma de l'installation de climatisation de l'invention;
- la figure 4 est un schéma d'un circuit de climatisation selon l'invention;
- la figure 5A est un organigramme représentant le contrôle de la vanne de répartition et du compresseur, selon l'invention; et
- la figure 5B est un organigramme représentant une variante de contrôle de la vanne de répartition et du compresseur, selon l'invention.

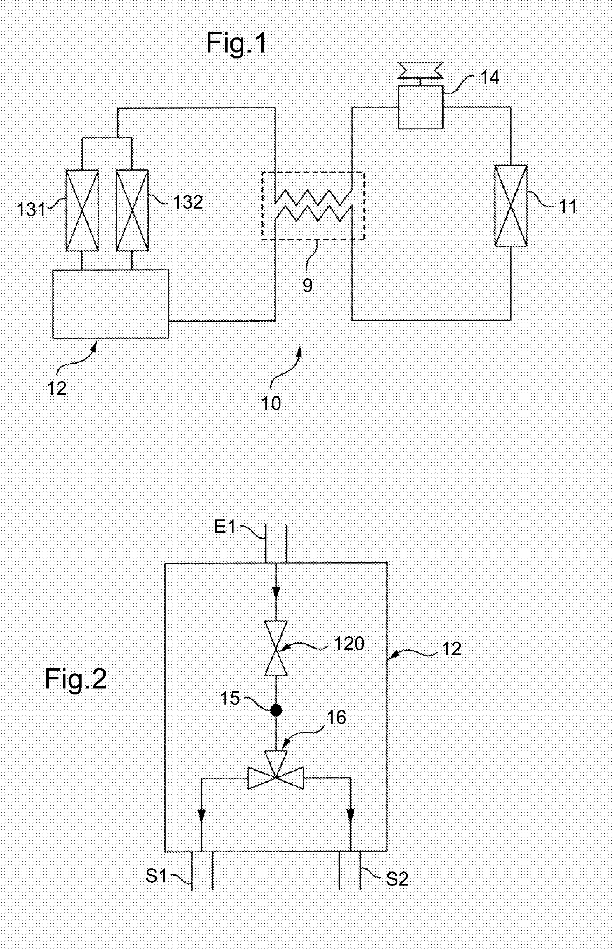

On se réfère tout d'abord à la figure 1 qui représente un circuit de climatisation 10 conforme à l'invention.
Le circuit de climatisation 10 est parcouru par un fluide réfrigérant de type CO2 (R744). Ce circuit 10 comporte:

- un compresseur 14 qui reçoit le fluide à l'état gazeux à une pression P0 et le comprime jusqu'à une pression donnée P1,
- un refroidisseur de gaz 11 ("gas cooler") qui refroidit le gaz comprimé par le compresseur, à pression sensiblement constante,

- un module de détente 12 qui abaisse la pression du fluide issu du refroidisseur de gaz 11, en l'amenant au moins en partie à l'état liquide, et
- deux évaporateurs 131 et 132 qui font passer le fluide à l'état liquide provenant du module de détente à l'état gazeux, à pression sensiblement constante, pour produire un flux d'air climatisé qui est envoyé vers l'habitacle du véhicule. Le premier évaporateur 131 est placé à l'avant de l'habitacle et le deuxième évaporateur 132 est placé à l'arrière de l'habitacle.

Le circuit peut comporter en outre un échangeur thermique interne 9, permettant au fluide circulant du refroidisseur de gaz 11 vers le module de détente 12 de céder de la chaleur au fluide circulant des évaporateurs 131 et 132 vers le compresseur 14.

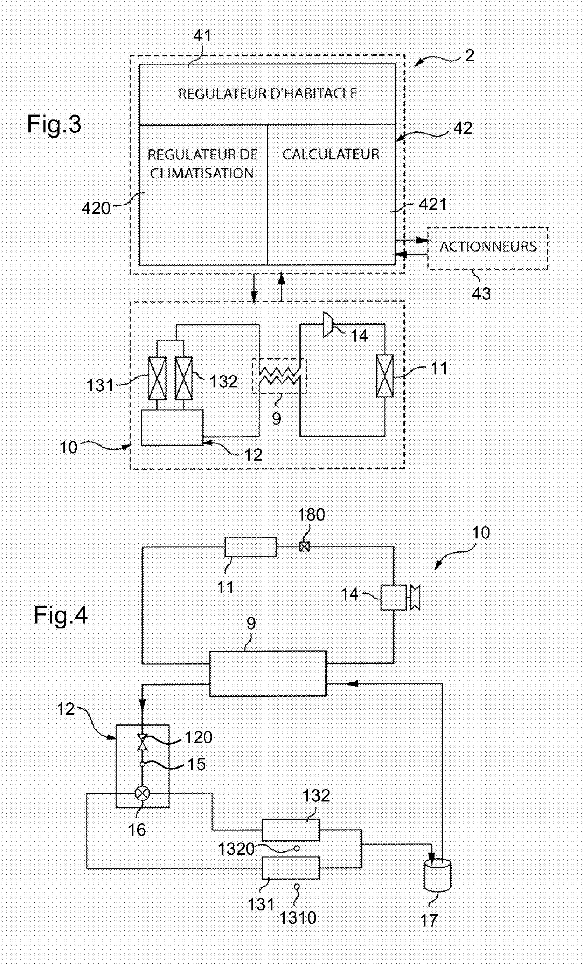

Un accumulateur 17 (figure 4) peut être prévu entre la sortie des évaporateurs 131 et 132 et l'entrée du compresseur 14 pour éviter les coups de liquide.

Le refroidisseur de gaz 11 reçoit un flux d'air extérieur pour évacuer la chaleur prélevée dans l'habitacle, qui dans certaines conditions de fonctionnement est mis en mouvement par un groupe moto-ventilateur.

Les évaporateurs 131 et 132 reçoivent un flux d'air d'un pulseur alimenté par un flux d'air extérieur pour produire un flux d'air climatisé.

Le premier évaporateur 131 est en particulier placé dans le compartiment de climatisation avant du véhicule et utilisé par l'installation de climatisation en tant qu'évaporateur principal. Le second évaporateur 132 est alors placé dans le compartiment de climatisation arrière du véhicule et est utilisé en tant qu'évaporateur auxiliaire dans une installation de climatisation dite secondaire.

Dans un circuit de climatisation fonctionnant selon un cycle supercritique, le fluide frigorigène supercritique est refroidi par l'air avec lequel il échange de la chaleur, dans le refroidisseur de gaz 11, mais l'échange n'est pas effectué de manière isotherme, comme cela se produit pour un fluide sous-critique circulant dans un condenseur.

Plus précisément, le fluide frigorigène supercritique est comprimé en phase gazeuse et amené à une pression élevée par le compresseur 14. Le refroidisseur de gaz 11 refroidit ensuite le fluide frigorigène grâce au flux d'air entrant. A la différence des circuits de climatisation fonctionnant en mode sous-critique, le refroidissement du fluide après compression n'entraîne pas de changement de phase. Le fluide ne passe à l'état liquide qu'au cours de la détente.

Ainsi, dans les installations de climatisation fonctionnant selon un cycle supercritique, le module de détente remplit d'autres fonctions que les fonctions de détente classiques des installations en mode sous-critique: il assure le contrôle de la haute pression du fluide, ce qui permet d'optimiser tant la capacité de refroidissement que l'efficacité de l'installation. Ces fonctions particulières nécessitent une structure adaptée du module de détente, une régulation de la distribution de fluide aux évaporateurs, et des composants à débit variable de l'installation.

La figure 2 est un schéma représentant le module de détente 12 de l'invention, plus en détail.

Le module de détente est intégré dans le circuit de climatisation 10 ci-dessus par une entrée E1 et deux sorties S1 et S2. L'entrée E1 reçoit le fluide réfrigérant en provenance du refroidisseur de gaz 11. Après avoir traversé le module de détente 12, le fluide réfrigérant peut sortir de celui-ci par les sorties S1 et S2, respectivement en direction des évaporateurs 131 et 132.

Le module de détente 12 présente une branche équipée d'un dispositif de détente 120, ainsi que d'une vanne de répartition 16 reliée au dispositif de détente 120 et aux deux sorties S1 et S2. Le dispositif de détente 120 et la vanne de répartition 16 sont ainsi montés en série. La vanne de répartition 16 est en particulier une vanne à trois voies distribuant le fluide qui sort du dispositif de détente 12 aux évaporateurs.

La vanne de répartition 16 permet d'ajuster la proportion de fluide à envoyer à chacun des deux évaporateurs 131 et 132, en fonction des besoins en froid. Elle permet en outre de faire fonctionner un seul évaporateur 131 ou les deux évaporateurs 131 et 132, selon les besoins.

Le module de détente 12 peut également être équipé d'un clapet de surpression 15 pour protéger les évaporateurs, l'excédant de pression étant envoyé vers l'extérieur du circuit de climatisation. Ce clapet de surpression est interposé entre le dispositif de détente 120 et la vanne de répartition 16.

Le dispositif de détente 120 assure la détente du fluide réfrigérant $CO_2$ qui le traverse tout en garantissant l'optimisation de la haute pression. Il peut être de type mécanique ou électrique.

Le dispositif de détente 120 et la vanne de répartition 16 peuvent être intégrés dans un module unique, pour réduire les coûts de l'installation. Ainsi, ils peuvent être assemblés entre eux de manière à former un module unitaire. En variante, ils peuvent être rapportés sur un bloc commun de manière à former un ensemble unitaire. Ce bloc commun présente alors l'entrée E1 et les sorties S1 et S2.

On se réfère maintenant à la figure 3 qui est une vue d'ensemble d'une installation de climatisation 2 conforme à l'invention.

L'installation 2 est équipée du circuit de climatisation 10, muni du module de détente 12 de l'invention.

L'installation 2 est équipée d'une unité de contrôle 42 et d'un régulateur d'habitacle 41. L'unité de contrôle 42 détermine les signaux de commande de composants à débit variable de l'installation pour optimiser la puissance frigorifique.

L'unité de contrôle 42 est constituée d'un régulateur de climatisation 420 qui régule les composants de l'installation et d'un calculateur 421, qui calcule les signaux de commande des composants à contrôle externe du circuit 10, en fonction d'informations transmises par des capteurs. La vanne de répartition 16, et le compresseur, lorsqu'il est muni d'une vanne de contrôle, constituent par exemple de tels composants à contrôle externe. L'unité de contrôle 42 interagit en outre avec des actionneurs 43, comme par exemple la vanne de contrôle du compresseur. Ces actionneurs appliquent les signaux de commande calculés aux composants.

Le régulateur d'habitacle 41 est destiné à fixer la consigne de température de l'air pulsé à l'entrée des évaporateurs 131 et 132, et fournit les températures de consigne des évaporateurs 131 et 132.

L'installation de climatisation proposée est prévue pour permettre un fonctionnement du circuit 10 selon un cycle supercritique compatible avec l'utilisation des deux évaporateurs 131, 132. Pour cela, elle utilise notamment le module de détente 12 qui assure non seulement la détente du fluide réfrigérant, mais aussi l'optimisation du débit de fluide réfrigérant. Par ailleurs, l'installation est adaptée pour contrôler rigoureusement les évaporateurs et notamment les températures d'évaporation des évaporateurs pour atteindre une puissance frigorifique répondant aux besoins des passagers du véhicule.

L'installation de l'invention peut fonctionner selon deux modes distincts:

- dans un premier mode, seul l'un des deux évaporateurs 131 ou 132 est activé;
- dans un deuxième mode, les deux évaporateurs 131 et 132 sont activés simultanément.

Dans le mode d'activation des deux évaporateurs, l'unité de contrôle 42 met en oeuvre une loi de régulation choisie pour contrôler la vanne de répartition 16, en fonction d'un paramètre de régulation, et donc la répartition du fluide réfrigérant sortant du dispositif de détente 120 entre les deux évaporateurs 131 et 132. Cette régulation de la vanne de répartition 16 est mise en oeuvre de manière à optimiser le coefficient de performance COP de la climatisation.

L'unité de contrôle 42 détermine au préalable le paramètre de régulation de la vanne de répartition à utiliser. Le paramètre de régulation est avantageusement relatif à la température d'évaporation $Te1$ ou $Te2$ de l'un au moins des évaporateurs 131 et 132.

Ainsi, cette loi permet de réguler le débit de fluide envoyé par la vanne de répartition vers le premier évaporateur et/ou vers le deuxième évaporateur en fonction de la température d'évaporation de l'un au moins des évaporateurs.

Pour réguler la vanne de répartition 16, l'unité de contrôle de l'invention peut également prendre en compte les consignes de température d'évaporation des évaporateurs 131 et 132 afin de fournir la puissance frigorifique requise par l'utilisateur. Ces consignes de températures représentent les demandes en froid des passagers du véhicule, par exemple à l'avant et à l'arrière du véhicule.

La loi de régulation peut être par exemple une loi de régulation en boucle fermée.

Les lois classiques de régulation en boucle fermée, par exemple la régulation proportionnelle intégrale dérivée PID, fournissent le signal de commande $S_{commande}$ d'un composant à débit variable et à contrôle externe à partir de l'écart entre la mesure M et la consigne C d'un paramètre de régulation donné, et appliquent ce signal de commande au composant jusqu'à ce que l'écart entre la mesure M et la consigne C du paramètre de régulation soit nul. La caractéristique d'une régulation de type PID est donnée par l'équation A1 de l'annexe A. Cette équation donne le signal de commande $S_{commande}$ du composant considéré en fonction de la mesure M et de la consigne C du paramètre de régulation. Dans le cadre de l'invention, l'unité de contrôle applique une telle loi de régulation en boucle fermée peut permettre de contrôler la vanne de répartition 16.

La loi de régulation en boucle fermée fournit le signal de commande de la vanne de répartition 16 en fonction de l'écart entre la mesure M et la consigne C d'un paramètre relatif à la température d'évaporation de l'un au moins des évaporateurs 131 et 132.

Après avoir déterminé le paramètre de régulation à utiliser, l'unité de contrôle 42 reçoit la mesure M et la consigne C du paramètre de régulation. Le régulateur de climatisation 420 de l'unité de contrôle met ensuite en oeuvre la régulation PID jusqu'à ce que l'écart entre la mesure M et la consigne C du paramètre de régulation soit proche de zéro. Les signaux de commande sont calculés par le calculateur 421 selon une relation du type de la relation A1, puis sont appliqués aux composants par les actionneurs 43.

En complément, lorsque le compresseur 14 est un compresseur à contrôle externe et à cylindrée variable, l'unité de contrôle 42 est également adaptée pour contrôler le compresseur selon une loi de régulation utilisant un paramètre de régulation relatif à la température d'évaporation $Te1$ ou $Te2$ de l'un au moins des évaporateurs 131 ou 132. Ainsi, cette loi de régulation est adaptée pour fournir le signal de commande du compresseur en fonction de la température d'évaporation $Te1$ ou $Te2$ de l'un au moins des évaporateurs. Cette loi peut également prendre en compte les consignes de température d'évaporation de l'un au moins des évaporateurs 131 et 132.

Cette loi de régulation peut également être une loi de régulation en boucle fermée fournissant le signal de commande du compresseur en fonction de l'écart entre la mesure M et la consigne C du paramètre de régulation. Cette loi de régulation fermée peut être par exemple une régulation proportionnelle intégrale dérivée PID.

Un compresseur à contrôle externe est muni d'une vanne de contrôle dont l'intensité Iv varie en fonction du signal de commande appliqué par les actionneurs 43. Le contrôle du compresseur 14 selon l'invention permet d'optimiser la puissance frigorifique du circuit de climatisation.

Bien que l'invention puisse s'appliquer à d'autres types de compresseurs, par exemple les compresseurs à contrôle interne à embrayage, on considérera, dans la suite de la description, que le compresseur 14 est un compresseur à contrôle externe et à cylindrée variable à titre d'exemple non limitatif.

Le circuit de climatisation 10 peut être équipé de deux capteurs de température: un premier capteur de température 1310, placé au niveau du premier évaporateur 131, pour mesurer sa température d'évaporation Te1 et un deuxième capteur de température 1320, placé au niveau du deuxième évaporateur 132 pour mesurer sa température d'évaporation Te2.

En variante, il peut être prévu un seul capteur 1310 au niveau du premier évaporateur 131 pour mesurer sa température d'évaporation Te1.

Le nombre de capteurs dépend du paramètre de régulation défini pour réguler la vanne de répartition ou le compresseur.

Chaque capteur 1310 (respectivement 1320) fournit la température d'évaporation Te1 (respectivement Te2) de l'évaporateur associé 131 (respectivement 132). Le capteur peut être placé derrière l'évaporateur associé 131 (respectivement 132), dans sa zone de surchauffe, ou encore dans le flux d'air traversant l'évaporateur. Les mesures fournies par les capteurs donnent des renseignements sur le niveau de remplissage des évaporateurs.

Dans la suite de la description, on considèrera que la loi de régulation utilisé est une loi de régulation en boucle fermée, à titre d'exemple non limitatif.

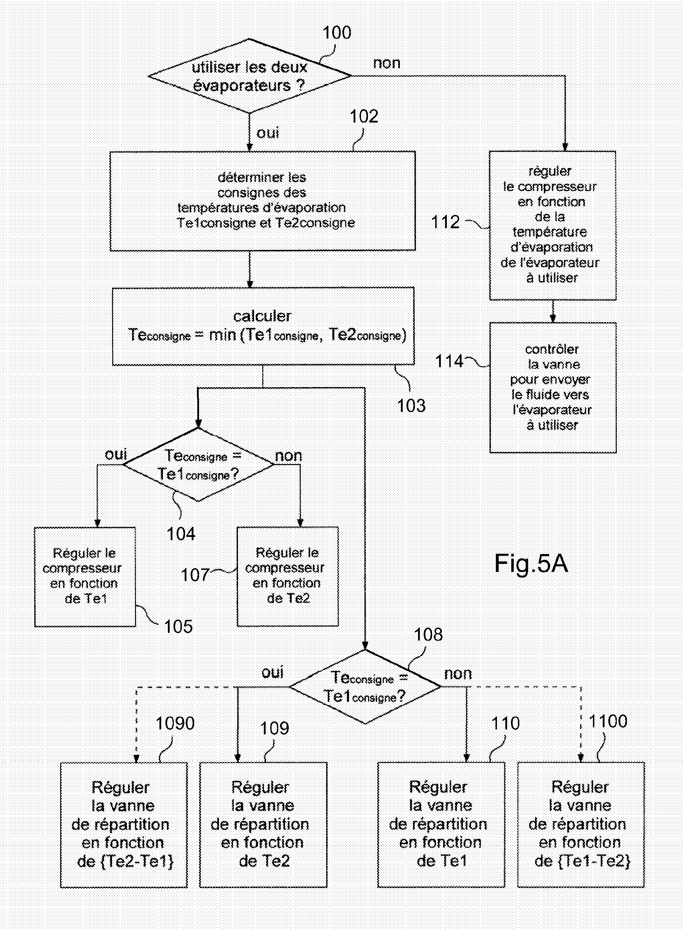

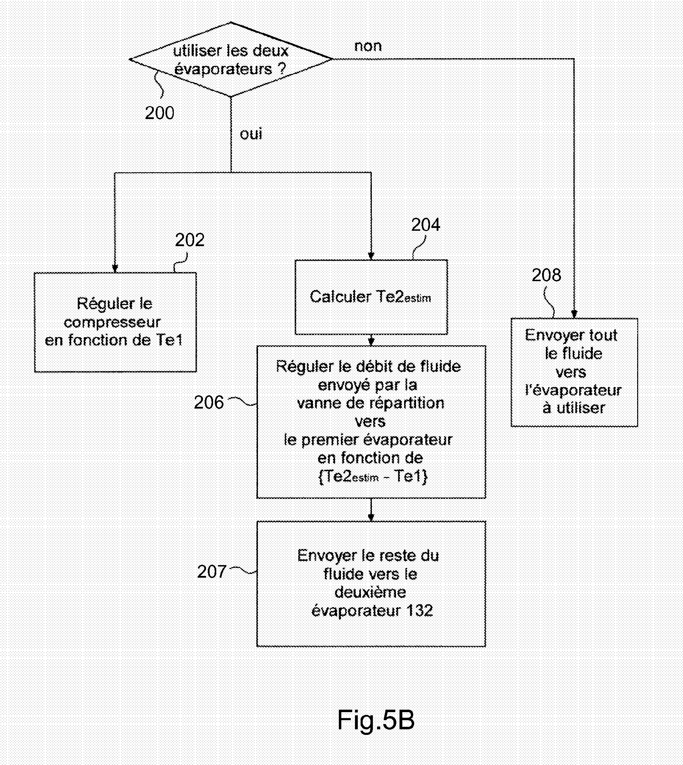

Le procédé de contrôle de la vanne de répartition 16 et du compresseur 14 va maintenant être décrit, en référence aux figures 5A et 5B.

La figure 5A est un organigramme illustrant les étapes de contrôle de la vanne de répartition 16 et du compresseur 14, lorsque le circuit de climatisation 10 est équipé de deux capteurs 1310 et 1320 pour mesurer respectivement les températures d'évaporation Te1 et Te2 des évaporateurs 131 et 132.

La figure 5B est un organigramme illustrant les étapes de contrôle de la vanne de répartition 16 et du compresseur 14, lorsque le circuit de climatisation 10 est équipé d'un seul capteur 1310 mesurant la température d'évaporation Te1 de l'évaporateur 131.

Il est tout d'abord fait référence à la figure 5A. Le circuit de climatisation 10 est ici équipé des deux capteurs 1310 et 1320.

A l'étape 100, l'unité de contrôle 42 détermine si les deux évaporateurs doivent être utilisés. L'utilisation de l'un ou des deux évaporateurs 131 et 132 dépend de la commande de température indiquée par un passager sur le tableau de commande de l'habitacle. Par exemple, lorsqu'une réduction de température, à l'arrière de l'habitacle, est demandée sur le tableau de commande, le deuxième évaporateur sera utilisé. Dans cet exemple, la capacité du compresseur et/ou le débit de fluide réfrigérant vers le deuxième évaporateur 132 dédié à la zone arrière de l'habitacle devront être augmentés.

Si les deux évaporateurs doivent être utilisés, à l'étape 102, le régulateur de l'habitacle 41 fournit les consignes $Te1_{consigne}$ et $Te2_{consigne}$ des températures d'évaporation respectives de l'évaporateur 131 et de l'évaporateur 132 au calculateur 421.

A l'étape 103, le calculateur 421 détermine une valeur de consigne minimale $Te_{consigne}$ correspondant à la plus petite valeur entre la consigne de température d'évaporation $Te1_{consigne}$ du premier évaporateur 131 et la consigne de température d'évaporation $Te2_{consigne}$ du deuxième évaporateur 132.

S'il est déterminé, à l'étape 104, que la valeur de consigne minimale $Te_{consigne}$ est la consigne de température d'évaporation $Te1_{consigne}$ du premier évaporateur, alors, à l'étape 105, l'unité de contrôle 42 utilise la température d'évaporation du premier évaporateur Te1 comme paramètre de régulation pour réguler le compresseur 14. La mesure de la température d'évaporation $Te1_{mesurée}$ du premier évaporateur 131 est fournie au calculateur 421 par le capteur 1310.

Par exemple, lorsque la loi de régulation est une régulation en boucle fermée, le signal de commande de la vanne de contrôle du compresseur $S_{commande}$ est calculé selon une relation analogue à A1 et est appliqué au compresseur 14 en fonction de l'écart entre la mesure $Te1_{mesurée}$ et la consigne $Te1_{consigne}$ de la température d'évaporation du premier évaporateur.

En revanche, s'il est déterminé, à l'étape 104, que la valeur de consigne minimale $Te_{consigne}$ est la consigne de température d'évaporation $Te2_{consigne}$ du deuxième évaporateur, l'unité de contrôle 42 utilise la température d'évaporation du deuxième évaporateur Te2 comme paramètre de régulation pour réguler le compresseur 14, à l'étape 107. La mesure de la température d'évaporation $Te2_{mesurée}$ du deuxième évaporateur 132 est fournie par le deuxième capteur 1320.

Par exemple, lorsque la loi de régulation est une loi en boucle fermée, le signal de commande de la vanne de contrôle du compresseur $S_{commande}$ est calculé selon une relation analogue à A1 en fonction de l'écart entre la mesure $Te2_{mesurée}$ et la consigne $Te2_{consigne}$ de la température d'évaporation du deuxième évaporateur.

La régulation de la vanne de répartition 16 va maintenant être décrite.

S'il est déterminé, à l'étape 108, que la valeur de consigne minimale $Te_{consigne}$ est la consigne de température d'évaporation $Te1_{consigne}$ du premier évaporateur, l'unité de contrôle utilise la température d'évaporation du deuxième évaporateur Te2 comme paramètre de régulation pour réguler la vanne de répartition 16, à l'étape 109. La mesure de la température d'évaporation $Te2_{mesurée}$ du deuxième évaporateur 132 est fournie par le deuxième capteur 1320.

Par exemple, lorsque la loi de régulation est une loi en boucle fermée, le signal de commande de la vanne de contrôle du compresseur $S_{commande}$ est calculé selon une relation A1 en fonction de l'écart entre la mesure $Te2_{mesurée}$ et la consigne $Te2_{consigne}$ de la température d'évaporation du deuxième évaporateur.

Lorsqu'il est déterminé, à l'étape 108, que la valeur de consigne minimale $Te_{consigne}$ est la consigne de température d'évaporation $Te1_{consigne}$ du premier évaporateur, l'unité de contrôle 42 peut utiliser, en variante, à l'étape 1090, la différence {Te2-Te1} entre la température d'évaporation du deuxième évaporateur Te2 et la température d'évaporation du premier évaporateur Te1 comme paramètre de régulation pour commander la vanne de répartition 16. La mesure de la température d'évaporation $Te1_{mesurée}$ du premier évaporateur 131 et la mesure de la température d'évaporation $Te2_{mesurée}$ du deuxième évaporateur 132 sont fournies respectivement par les capteurs 1310 et 1320.

Dans l'exemple d'une loi de régulation en boucle fermée, le signal de commande de la vanne de contrôle du compresseur $S_{commande}$ est ainsi calculé selon une relation analogue à A1 en fonction de l'écart entre la mesure {$Te2_{mesurée}$-$Te1_{mesurée}$} et une consigne relative à la consigne de température d'évaporation $Te1_{consigne}$ et $Te2_{consigne}$ de l'un au moins des évaporateurs 131 et 132.

En revanche, s'il est déterminé, à l'étape 108, que le valeur de consigne minimale $Te_{consigne}$ est la consigne de température d'évaporation $Te2_{consigne}$ du deuxième évaporateur, alors, à l'étape 110, l'unité de contrôle 42 utilise la température d'évaporation du premier évaporateur Te1 comme paramètre de régulation pour contrôler la vanne 16. La mesure de la température d'évaporation $Te1_{mesurée}$ du premier évaporateur 131 est fournie au calculateur 421 par le capteur 1310.

En variante, à l'étape 1100, l'unité de contrôle 42 peut également utiliser la différence entre les températures d'évaporation des deux évaporateurs {Te1-Te2}, comme paramètre de régulation pour commander la vanne de répartition 16. Les mesures de la température d'évaporation $Te1_{mesurée}$ et $Te2_{mesurée}$ du premier évaporateur 131 et du deuxième évaporateur 132 sont fournies respectivement par les capteurs 1310 et 1320.

Par exemple, pour une loi de régulation en boucle fermée, le signal de commande de la vanne de répartition $S_{commande}$ est calculé selon une relation analogue à A1 en fonction de l'écart entre la mesure $Te1_{mesurée}$ et la consigne $Te1_{consigne}$ de la température d'évaporation du premier évaporateur (étape 110), ou en variante en fonction de l'écart entre la mesure {$Te1_{mesurée}$-$Te2_{mesurée}$} et une consigne relative à la consigne de température d'évaporation $Te1_{consigne}$ et $Te2_{consigne}$ de l'un au moins des évaporateurs 131 et 132 (étape 1110).

Le mode de fonctionnement à un seul évaporateur, par exemple lorsque la demande en froid ne provient que de l'avant ou que de l'arrière du véhicule, va maintenant être décrit.

Plus précisément, lorsqu'il est déterminé, à l'étape 100, qu'un seul évaporateur doit être utilisé, par exemple le premier évaporateur 131, l'unité de contrôle utilise la température d'évaporation de cet évaporateur comme paramètre de régulation pour réguler le compresseur 14, à l'étape 112. La mesure de cette température d'évaporation est fournie par le capteur associé à l'évaporateur, par exemple par le capteur 1310.

Par ailleurs, lorsqu'un seul évaporateur doit être utilisé, par exemple le premier évaporateur 131, l'unité de contrôle 42 régule la vanne de répartition 16 de manière à envoyer le fluide seulement vers l'évaporateur à utiliser, ici le premier évaporateur 131, à l'étape 114.

Il est maintenant fait référence à la figure 5B. Dans cette forme de réalisation, le circuit 10 n'est équipé que d'un seul capteur de température, en particulier le capteur 1310 de l'évaporateur principal 131. Dans la description qui suit, on considèrera que seul ce capteur 1310 est utilisé.

Dans cette forme de réalisation, l'unité de contrôle 42 régule la vanne de répartition 16 de manière à optimiser le remplissage de l'évaporateur principal équipé du capteur, ici l'évaporateur 131. L'autre évaporateur 132 est alors rempli avec le fluide réfrigérant restant.

Le procédé de contrôle de la vanne de répartition 16 et du compresseur 14 va maintenant être décrit, en référence à la figure 5B.

A l'étape 200, l'unité de contrôle 42 détermine si les deux évaporateurs doivent être utilisés. Un seul évaporateur 131 ou 132 sera utilisé si les passagers n'ont demandé du froid qu'à l'avant du véhicule ou qu'à l'arrière du véhicule. Les deux évaporateurs 131 et 132 seront utilisés si les passagers ont demandé du froid tant à l'avant du véhicule qu'à l'arrière du véhicule.

Si les deux évaporateurs doivent être utilisés, l'unité de contrôle 42 utilise, à l'étape 202, la température d'évaporation du premier évaporateur Te1 comme paramètre de régulation pour contrôler le compresseur 14. La mesure de la température d'évaporation $Te1_{mesurée}$ du premier évaporateur 131 à l'unité de contrôle 42 est fournie par le capteur 1310 placé au niveau de l'évaporateur principal 131.

Par exemple, la loi de régulation est en boucle fermée, comme la régulation PID donnée par la relation A1. Le signal de commande de la vanne de contrôle du compresseur $S_{commande}$ est alors calculé en fonction de l'écart entre la mesure $Te1_{mesurée}$ de la température d'évaporation du premier évaporateur et une consigne $Te_{consigne}$ de température. Le régulateur d'habitacle 41 peut fournir, en complément, les consignes $Te1_{consigne}$ et $Te2_{consigne}$ des températures d'évaporation respectives de l'évaporateur 131 et de l'évaporateur 132 à l'unité de contrôle 42. La consigne $Te_{consigne}$ de température peut alors être la plus petite valeur entre la consigne de température d'évaporation $Te1_{consigne}$ du premier évaporateur 131 et la consigne de température d'évaporation $Te2_{consigne}$ du deuxième évaporateur 132.

Dans le cas où seuls les passagers arrières demandent du froid, la régulation du compresseur utilise alors la température $Te2_{estim}$ telle que déterminée ci-après.

La régulation de la vanne de répartition va maintenant être décrite.

A l'étape 204, le calculateur 421 calcule une estimation de la température d'évaporation du deuxième évaporateur $Te2_{estim}$ selon la relation A2 de l'annexe A, à partir :

- du coefficient thermique du deuxième évaporateur $K_{eff}$ ;
- d'une estimation de la pression $P_{sortie-132}$ du fluide réfrigérant à la sortie du deuxième évaporateur 132; et
- de la température $T_{air-amont}$ du flux d'air en amont du deuxième évaporateur 132.

Le coefficient thermique du deuxième évaporateur $K_{eff}$ peut être calculé à partir de la tension du pulseur d'air $U_{puls-132}$ du deuxième évaporateur 132, de la vitesse d'avancement du véhicule Va, et de la valeur de consigne minimale $Te_{consigne}$.

La pression $P_{sortie-132}$ du fluide réfrigérant à la sortie du deuxième évaporateur 132 peut être estimée à partir de la pression d'aspiration $P_{asp}$ du compresseur 14.

La température $T_{air-amont}$ du flux d'air en amont du deuxième évaporateur peut être estimée ou mesurée.

A l'étape 206, l'unité de contrôle 42 utilise la différence $\{Te2_{estim}-Te1\}$ entre la température d'évaporation estimée du deuxième évaporateur $Te2_{estim}$ et la température d'évaporation du premier évaporateur Te1, comme paramètre de régulation pour contrôler la vanne de répartition. La mesure de la température d'évaporation $Te1_{mesurée}$ du premier évaporateur 131 est fournie par le capteur 1310.

Le contrôle de la vanne de répartition à partir de la différence $\{Te2_{estim}-Te1\}$ entre la température d'évaporation estimée du deuxième évaporateur $Te2_{estim}$ et la température d'évaporation du premier évaporateur Te1 permet de garantir l'équilibre de débit entre les deux évaporateurs et permet surtout d'éviter la surchauffe sur le deuxième évaporateur. Si la différence de température est dépasse un seuil déterminé, la vanne de répartition corrige en envoyant plus de débit vers le deuxième évaporateur. Si cette modification de débit affecte trop la température au premier évaporateur alors le compresseur prend le relais en fournissant plus de débit.

Lorsqu'il est déterminé à l'étape 200 qu'un seul évaporateur doit être utilisé, par exemple si les passagers n'ont demandé du froid qu'à l'avant ou qu'à l'arrière du véhicule, à l'étape 208, la vanne de répartition 16 est contrôlée de manière à envoyer tout le fluide vers l'évaporateur à utiliser, par exemple le premier évaporateur 131 si un passager a demandé du froid à l'avant du véhicule.

L'invention permet une répartition du fluide réfrigérant à la sortie du dispositif de détente 120 garantissant une optimisation de la haute pression et de la puissance frigorifique du circuit de climatisation 10.

L'installation de l'invention permet également d'améliorer le retour d'huile dans le compresseur. Lorsque la capacité du compresseur est faible sur une période assez longue, il existe en effet un risque que l'huile se trouve piégée dans l'un ou l'autre des évaporateurs, ce qui peut, à terme, amener le compresseur à tourner sans huile et donc l'endommager.

Pour résoudre ce problème, l'unité de contrôle 42 est apte à commander la vanne de répartition 16 périodiquement pour qu'elle augmente rapidement le débit de fluide réfrigérant envoyé vers l'évaporateur secondaire 132, afin d'évacuer l'huile piégé dans l'évaporateur qui, par conséquent, sera ensuite transmise au compresseur. La quantité d'huile de lubrification qui arrive au compresseur est ainsi augmentée.

En complément, pour éviter une surpression au niveau des évaporateurs, l'unité de contrôle 42 peut surveiller les paramètres de sortie du refroidisseur de gaz 11. Ainsi, un capteur de température et de pression 180 (ou un capteur de pression et un capteur de température séparés) peut être prévu à la sortie du refroidisseur de gaz 11. Ce capteur fournit une mesure de la température $T_m$ et de la pression Pm du fluide en sortie du refroidisseur de gaz 11 à l'unité de contrôle 42 de l'invention. L'unité de contrôle 42 compare la température $T_m$ mesurée à un seuil de température préfixé $T_{lim}$ et la pression $P_m$ mesurée à un seuil de pression $P_{lim}$. Lorsque les valeurs mesurées dépassent les seuils, l'unité de contrôle 42 diminue la cylindrée du compresseur de manière à réduire les valeurs de la température et de la pression du fluide à la sortie du refroidisseur de gaz 11. L'unité de contrôle poursuit la surveillance de des valeurs mesurées par le capteur 180 en les comparant régulièrement aux seuils et arrête la climatisation si ces valeurs continuent malgré tout à augmenter.

Dans cette forme de réalisation, le clapet de surpression 15 n'intervient que si l'unité de contrôle 42 n'est pas parvenue à protéger le circuit de climatisation en surveillant les paramètres de sortie du refroidisseur de gaz 11.

L'invention permet l'utilisation de deux évaporateurs tout en assurant un contrôle efficace de la détente du fluide réfrigérant. Elle assure une répartition du fluide réfrigérant entre les deux évaporateurs, compatible avec l'optimisation de la haute pression du fluide réfrigérant. La régulation de la vanne de répartition 16 permet l'activation d'un seul évaporateur ou des deux selon les besoins.

Le nombre de capteurs utilisés sur la boucle de climatisation de l'invention est sensiblement le même que celui des boucles de climatisation classiques à un seul évaporateur. Le module de détente 12 est par ailleurs constitué de composants standard qui peuvent être intégrés ensemble. Ainsi, l'installation de l'invention peut donc être réalisée à moindre coût.

Bien que l'invention s'applique à des boucles de climatisation constituées de tout type de compresseur, elle est particulièrement avantageuse lorsque le compresseur est un compresseur à contrôle externe et à cylindrée variable.

Par ailleurs, l'invention n'est pas limitée à des régulations en boucle fermée pour contrôler la vanne de répartition 16 et le compresseur 14. En effet, toute loi de régulation de la vanne de répartition et toute loi de régulation du compresseur utilisant un paramètre de régulation relatif à la température d'évaporation de l'un des évaporateurs peuvent être utilisées dans le cadre de l'invention.

La régulation du compresseur et la régulation de la vanne de répartition peuvent être mises en oeuvre indépendamment l'une de l'autre et selon des lois de régulation différentes. Ainsi, bien qu'en référence aux figures 5A et 5B, la régulation de la vanne de répartition a été décrite successivement à celle de la régulation du compresseur, ces deux régulations peuvent être mises en oeuvre en parallèle, indépendamment l'une de l'autre. Dans certaines réalisations, il pourrait même être envisagé de ne mettre en oeuvre que la régulation de la vanne de répartition.

Par ailleurs, l'invention n'est pas limitée aux modes de réalisation décrits ci-dessus. Elle englobe toutes les variantes de réalisation qui pourront être envisagées par l'homme du métier. En particulier, le dispositif de détente 120 peut prendre toute forme adaptée à un circuit de climatisation fonctionnant selon un cycle supercritique.

Annexe A

<u>A1</u> :

$$S_{commande} = +/- \ G(\ M - C) + (G/Ti)\int_{0;t} (M - C)dt + G.t_d \ *d(M - C)/dt) + S_0$$

<u>A2</u> :

$$Te2_{estim} = f(K_{eff} \ ; \ P_{sortie\text{-}131}; \ T_{air\_amont})$$

<u>A3</u>:

$$S = g \ (V_a, \ U_{puls1}, \ T_{amb}, \ T_{entrée\text{-}11}, \ T_{sortie\text{-}11}, \ P_{asp}, \ Iv)$$

**Revendications**

1. Module de détente pour circuit (10) de climatisation à fluide réfrigérant supercritique, **caractérisé en ce qu'**il est relié audit circuit par une entrée et deux sorties et **en ce qu'**il comporte un dispositif de détente (120) et une vanne de répartition (16) reliée audit dispositif de détente et aux deux sorties.

**2.** Module de détente selon la revendication 1, **caractérisé en ce que** le dispositif de détente (120) et la vanne de répartition (16) sont assemblés entre eux de manière à former un module unitaire.

**3.** Module de détente selon la revendication 1, **caractérisé en ce que** le dispositif de détente (120) et la vanne de répartition (16) sont rapportés sur un bloc commun de manière à former un ensemble unitaire, le bloc commun présentant ladite entrée et lesdites sorties.

**4.** Module de détente selon l'une des revendications précédentes, **caractérisé en ce que** le module de détente (12) comporte un clapet de surpression (15).

**5.** Module de détente selon la revendication 4, **caractérisé en ce que** le clapet de surpression est placé entre le dispositif de détente (120) et la vanne de répartition (16).

**6.** Module de détente selon l'une des revendications précédentes, **caractérisé en ce que** la vanne de répartition (16) est une vanne à trois voies.

**7.** Circuit de climatisation (10), pour véhicule à moteur, parcouru par un fluide réfrigérant supercritique, comprenant un compresseur (14), un refroidisseur de gaz (11) et au moins deux évaporateurs (131, 132), montés en parallèle, **caractérisé en ce qu'**il comporte un module de détente selon l'une des revendications 1 à 6, recevant le fluide en provenance du refroidisseur de gaz par ladite entrée et délivrant le fluide à l'un au moins des évaporateurs (131, 132) par lesdites sorties.

**8.** Circuit de climatisation selon la revendication 7, **caractérisé en ce qu'**il comporte en outre un échangeur interne (9) agencé de manière à permettre un échange de chaleur entre une portion de la branche reliant les évaporateurs (131, 132) au compresseur (14) et une portion de la branche reliant le refroidisseur de gaz (11) au module de détente (12).

**9.** Installation de climatisation équipée d'un circuit de climatisation selon l'une des revendications 7 et 8, **caractérisée en ce qu'**elle comporte en outre une unité de contrôle (42) adaptée pour contrôler la vanne de répartition (16) du module de détente.

**10.** Installation selon la revendication 9, **caractérisée en ce que**, en présence d'une commande d'activation des deux évaporateurs, l'unité de contrôle (42) est apte à contrôler la vanne de répartition (16) selon une loi de régulation choisie fournissant le signal de commande de la vanne en fonction de la température d'évaporation de l'un au moins des évaporateurs (131, 132).

**11.** Installation selon la revendication 10, **caractérisée en ce que** l'unité de contrôle est apte à utiliser la température d'évaporation de l'évaporateur (131, 132) dont la consigne est la plus grande comme paramètre de régulation pour contrôler la vanne de répartition (16).

**12.** Installation selon la revendication 11, **caractérisée en ce que** l'unité de contrôle (42) est apte à utiliser la différence entre les températures d'évaporation des deux évaporateurs (131, 132) comme paramètre de régulation pour contrôler la vanne de répartition (16).

**13.** Installation selon la revendication 11 et 12, **caractérisée en ce que** le circuit de climatisation (10) comporte deux capteurs de température (1310, 1320) aptes à mesurer respectivement la température d'évaporation du premier évaporateur (131) et la température d'évaporation du deuxième évaporateur (132).

**14.** Installation selon la revendication 10, **caractérisée en ce que** l'unité de contrôle (42) est apte à utiliser la différence entre la température d'évaporation du premier évaporateur (131) et une estimation de la température d'évaporation du deuxième évaporateur (132) comme paramètre de régulation pour contrôler la vanne de répartition (16).

**15.** Installation selon la revendication 14, **caractérisée en ce que** l'unité de contrôle (42) est apte à calculer l'estimation de la température d'évaporation ($Te2_{estim}$) du deuxième évaporateur à partir du coefficient thermique de l'évaporateur ($K_{eff}$), de la pression du fluide à la sortie du deuxième évaporateur ($P_{sortie\_ev}$), et de la température ($T_{sortie\_air}$) du flux d'air en aval du deuxième évaporateur (132).

**16.** Installation selon l'une des revendications 14 et 15, **caractérisée en ce qu'**il comporte un capteur de température placé au niveau du premier évaporateur (131) pour mesurer la température d'évaporation du premier évaporateur (131).

17. Installation selon l'une des revendications 13 et 16, **caractérisée en ce que** chaque capteur de température est placé dans la zone de surchauffe de l'évaporateur associé ou dans le flux d'air traversant l'évaporateur associé.

18. Installation selon l'une des revendications 10 à 17, **caractérisée en ce que** la loi de régulation est une régulation en boucle fermée fournissant le signal de commande de la vanne en fonction de l'écart entre la mesure et la consigne du paramètre de régulation.

19. Installation selon la revendication 18, **caractérisée en ce que** la loi de régulation en boucle fermée est une régulation proportionnelle intégrale dérivée.

20. Installation selon la revendication 9, **caractérisée en ce que**, en présence d'une commande d'utilisation d'un seul évaporateur, l'unité de contrôle (42) est apte à commander l'ouverture de la vanne de répartition de manière à envoyer sensiblement tout le fluide réfrigérant vers l'évaporateur à utiliser.

21. Installation selon l'une des revendications 9 à 20, **caractérisée en ce que** l'unité de contrôle (42) est en outre apte à contrôler le compresseur (14) selon une loi de régulation choisie fournissant le signal de commande du compresseur en fonction d'un paramètre de régulation relatif à la température d'évaporation de l'un au moins des évaporateurs (131,132).

22. Installation selon la revendication 21, **caractérisée en ce que** l'unité de contrôle (42) est apte à utiliser la température d'évaporation ($Te1$, $Te2$) de l'évaporateur dont la consigne de température d'évaporation ($Te1_{consigne}$, $Te2_{consigne}$) est la plus petite comme paramètre de régulation pour contrôler le compresseur.

23. Installation selon l'une des revendications 21 et 22, **caractérisée en ce que** le compresseur (14) est à contrôle externe et à cylindrée variable.

24. Installation selon l'une des revendications 9 à 23, **caractérisée en ce que** le premier évaporateur est placé dans le compartiment de climatisation avant du véhicule, et **en ce que** le deuxième évaporateur est placé dans le compartiment de climatisation arrière du véhicule.

25. Procédé de contrôle du circuit de climatisation selon l'une des revendications 7 et 8, **caractérisé en ce qu'**il comporte les étapes suivantes :

a) déterminer si les deux évaporateurs doivent être utilisées en fonction des demandes en froid des passagers et
b) si les deux évaporateurs doivent être utilisés, réguler la vanne de répartition selon une loi de régulation choisie utilisant comme paramètre de régulation la température d'évaporation ($Te1$, $Te2$) de l'un au moins des évaporateurs.

# Fig.1

# Fig.2

**Fig.3**

41

REGULATEUR D'HABITACLE

2

42

REGULATEUR DE
CLIMATISATION

CALCULATEUR

420

421

ACTIONNEURS

43

131    132

14

9

11

10    12

**Fig.4**

180

11    10

14

9

12

120

15

16

132

1320

131

1310

17

**100**

utiliser les deux
évaporateurs ?

non

oui

**102**

déterminer les
consignes des
températures d'évaporation
Te1consigne et Te2consigne

**112**

réguler
le compresseur
en fonction
de la
température
d'évaporation
de l'évaporateur
à utiliser

calculer
$Te_{consigne} = min\ (Te1_{consigne}, Te2_{consigne})$

**103**

**114**

contrôler
la vanne
pour envoyer
le fluide vers
l'évaporateur
à utiliser

oui

$Te_{consigne} =$
$Te1_{consigne}?$

non

**104**

Réguler le
compresseur
en fonction
de Te1

**107**

Réguler le
compresseur
en fonction
de Te2

Fig.5A

**105**

**108**

oui

$Te_{consigne} =$
$Te1_{consigne}?$

non

**1090**

**109**

**110**

**1100**

Réguler
la vanne
de répartition
en fonction
de {Te2-Te1}

Réguler
la vanne
de répartition
en fonction
de Te2

Réguler
la vanne
de répartition
en fonction
de Te1

Réguler
la vanne
de répartition
en fonction
de {Te1-Te2}

utiliser les deux
évaporateurs ?

200

non

oui

202

Réguler le
compresseur
en fonction de Te1

204

Calculer Te2estim

206

Réguler le débit de fluide
envoyé par la
vanne de répartition
vers
le premier évaporateur
en fonction de
{Te2estim – Te1}

207

Envoyer le reste du
fluide vers le
deuxième
évaporateur 132

208

Envoyer tout
le fluide
vers
l'évaporateur
à utiliser

Fig.5B

# EP 1 806 547 A1

**Office européen des brevets**

## RAPPORT DE RECHERCHE EUROPEENNE

Numéro de la demande

EP 07 10 0001

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 082 128 A (LAKE ET AL) 4 juillet 2000 (2000-07-04) | 1-3,6 | INV. F25B9/00 |
| Y | * colonne 4, ligne 38 - ligne 51 * * colonne 5, ligne 36 - colonne 6, ligne 44; figures 1,2,3a * * colonne 13, ligne 22 - colonne 14, ligne 9; figure 8 * | 4,5,7-25 | |
| X | DE 43 33 421 A1 (THERMAL-WERKE, WAERME-, KAELTE-, KLIMATECHNIK GMBH, 68766 HOCKENHEIM,) 20 avril 1995 (1995-04-20) | 1-3,6 | |
| Y | * le document en entier * | 4,5 | |
| X | US 6 463 222 B1 (ITO TAKESHI ET AL) 8 octobre 2002 (2002-10-08) | 1-3,6 | |
| Y | * le document en entier * | 4,5 | |
| X | EP 0 625 684 A (CARRIER CORPORATION) 23 novembre 1994 (1994-11-23) | 1-3,6 | |
| Y | * le document en entier * | 4,5 | DOMAINES TECHNIQUES RECHERCHES (IPC) |
| Y | PATENT ABSTRACTS OF JAPAN vol. 2003, no. 07, 3 juillet 2003 (2003-07-03) & JP 2003 065635 A (ZEXEL VALEO CLIMATE CONTROL CORP), 5 mars 2003 (2003-03-05) * abrégé * | 4,5 | F25B |
| Y | DE 103 06 395 A1 (VOLKSWAGEN AG) 26 août 2004 (2004-08-26) * le document en entier * | 7-9, 20-25 | |
| Y | DE 19 35 194 A1 (HELMUT SCHIMPKE,FABRIK FUER INDUSTRIE-KUEHLANLAGEN) 21 janvier 1971 (1971-01-21) * le document en entier * | 10-19,25 | |

Le présent rapport a été établi pour toutes les revendications

| Lieu de la recherche | Date d'achèvement de la recherche | Examinateur |
|---|---|---|
| Munich | 12 mars 2007 | Ritter, Christoph |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

16

**ANNEXE AU RAPPORT DE RECHERCHE EUROPEENNE
RELATIF A LA DEMANDE DE BREVET EUROPEEN NO.**

EP 07 10 0001

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-03-2007

| Document brevet cité au rapport de recherche | | | Date de publication | Membre(s) de la famille de brevet(s) | | | Date de publication |
|---|---|---|---|---|---|---|---|
| US 6082128 | A | | 04-07-2000 | AUCUN | | | |
| DE 4333421 | A1 | | 20-04-1995 | AUCUN | | | |
| US 6463222 | B1 | | 08-10-2002 | JP | 2000253282 | A | 14-09-2000 |
| EP 0625684 | A | | 23-11-1994 | BR | 9402009 | A | 13-12-1994 |
| | | | | DE | 69414029 | D1 | 26-11-1998 |
| | | | | DE | 69414029 | T2 | 10-06-1999 |
| | | | | US | 5341656 | A | 30-08-1994 |
| JP 2003065635 | A | | 05-03-2003 | WO | 03019089 | A1 | 06-03-2003 |
| DE 10306395 | A1 | | 26-08-2004 | AT | 345222 | T | 15-12-2006 |
| | | | | EP | 1462281 | A2 | 29-09-2004 |
| DE 1935194 | A1 | | 21-01-1971 | AUCUN | | | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6092379 A